# DEMANDE DE BREVET EUROPEEN

(11) **EP 0 957 650 A1**
(43) Date de publication de la demande: **17.11.1999**
(21) Numéro de dépôt: 99460034.4
(22) Date de dépôt: 14.05.1999
(51) Int. Cl.: H04Q 7/32

(54) **"Procédé et système pour utiliser simultanément un radiotéléphone mobile selon au moins deux modalités d'utilisation, radiotéléphone mobile permettant de mettre en oeuvre"**

(30) Priorité: 13.05.1998 FR 9806270
(71) Demandeur: Societé Francaise du Radiotéléphone SRF, 92915 Paris la Défence (FR)
(72) Inventeur: Frey, Sophie, 78100 Saint-Germain-en-Laye (FR)
(74) Mandataire: Vidon, Patrice

(57) **Abrégé**

La présente invention concerne un procédé pour utiliser simultanément, de manière ergonomique, un radiotéléphone mobile (1) selon au moins deux modes d'utilisation correspondants à au moins deux catégories d'appels ayant chacune un numéro de ligne distinct, notamment des appels personnels et des appels professionnels. Ledit procédé comprend les étapes : d'associer à chaque mode d'utilisation une gamme de services ; de communiquer les différents modes d'utilisation et les services qui leur sont associés sous forme visuelle sur un écran de visualisation (8) associé au radiotéléphone mobile (1) ; de sélectionner (15) undit mode d'utilisation et lesdits services associés ; de discriminer (14) entre les catégories d'appels, entrants et/ou sortants, selon le mode d'utilisation sélectionné ; d'établir une facturation indépendante pour chaque catégorie d'appels.

## Description

La présente invention concerne le domaine de la radiotéléphonie.

Outil permanent et mobile par nature, le radiotéléphone mobile a vocation à être utilisé à la fois à des fins personnelles et professionnelles. Toutefois, les sphères d'utilisation personnelles et professionnelles sont disjointes. Les payeurs associés à ces deux usages ne se confondent pas nécessairement avec l'utilisateur.

La présente invention se propose de résoudre ce problème et de mettre à la disposition des utilisateurs un radiotéléphone mobile qui permet de distinguer les usages professionnels des usages personnels. Il est essentiel qu'ils puissent faire la distinction entre les facturations attachées à leurs besoins personnels de celles relatives à leurs activités professionnelles. Les services, mis à la disposition des utilisateurs par les opérateurs de télécommunication, doivent également pouvoir être programmés de manière différente selon que les radiotéléphones mobiles sont utilisés dans un cadre personnel ou dans un cadre professionnel. Enfin, les multiples modalités d'utilisation du radiotéléphone mobile ne doivent pas avoir pour effet de compliquer l'emploi de celui-ci. Il doit être ergonomique à gérer.

Le procédé, le système et le radiotéléphone mobile selon l'invention permettent d'atteindre ces objectifs.

Le procédé pour utiliser simultanément un radiotéléphone mobile selon au moins deux modes d'utilisation correspondants à au moins deux catégories d'appels ayant chacune un numéro de ligne distinct (notamment des appels personnels et des appels professionnels) comprend plusieurs étapes.

Ledit procédé comprend les étapes :
- d'associer à chaque mode d'utilisation une gamme de services,
- de communiquer les différents modes d'utilisation et les services qui leur sont associés au moyen d'un menu unique délivré à l'utilisateur, notamment sous forme visuelle sur un écran de visualisation associé au radiotéléphone mobile,
- de sélectionner undit mode d'utilisation et lesdits services.

Il convient de préciser ici que le menu est unique en ce sens que l'utilisateur dispose d'un menu de référence qui lui permet de programmer, notamment en actionnant une ou plusieurs touches, les sous-menus relatifs aux différentes catégories d'appels. Ainsi, l'utilisateur peut, sans interrompre le fonctionnement du radiotéléphone mobile, programmer de manière ergonomique, au moyen du menu, les modalités selon lesquelles les appels personnels ou professionnels qu'il émet ou reçoit doivent être traités.

Le procédé selon l'invention comprend en outre les étapes :
- de discriminer entre les catégories d'appels, entrant et/ou sortant, selon le mode sélectionné,
- d'établir une facturation indépendante pour chaque catégorie d'appels.

De préférence, le procédé selon l'invention est tel qu'il comprend en outre l'étape d'associer au moins un même service à plusieurs modes, notamment le service répondeur. Ainsi, l'utilisateur peut, en consultant le service répondeur unique, avoir accès en même temps, rapidement et commodément aux différents messages discriminés par catégorie d'appels.

De préférence également, l'étape de sélection du mode d'utilisation comprend l'étape d'un appui, notamment un appui prolongé, sur une touche du radiotéléphone mobile ou l'étape de faire défiler ledit menu sur un écran de visualisation du radiotéléphone mobile.

Le système selon l'invention pour utiliser simultanément au moins un radiotéléphone mobile selon au moins deux modes d'utilisation correspondants à au moins deux catégories d'appels ayant chacune un numéro de ligne distinct, notamment des appels personnels et des appels professionnels comprend les moyens suivants :
- des moyens pour mettre en oeuvre une gamme de services spécifiques à chaque mode d'utilisation,
- des moyens de communication, notamment un écran de visualisation, associés à chaque radiotéléphone mobile, pour communiquer à l'utilisateur un menu unique contenant les différents modes d'utilisation et les services qui leur sont spécifiques,
- des moyens de sélection, associés à chaque radiotéléphone mobile, pour sélectionner sur ledit menu unique undit mode d'utilisation et lesdits services.

Ainsi, l'utilisateur peut, sans interrompre le radiotéléphone mobile, programmer de manière ergonomique, au moyen du menu, les modalités selon lesquelles les appels personnels ou professionnels qu'il émet ou reçoit doivent être traités.

Le système selon l'invention comprend en outre :
- au moins un centre de gestion d'appels entrant et/ou sortant, interconnecté par liaison hertzienne avec chaque radiotéléphone mobile ;
chaque radiotéléphone mobile et/ou le centre de gestion d'appels comprenant:
- des moyens de discrimination pour discriminer entre chaque catégorie d'appels entrant et/ou sortant, selon le mode sélectionné,
- des moyens de calcul pour établir le montant des factures respectivement relatives à chaque catégorie d'appels.

De préférence, le système selon la revendication est tel qu'il comprend en outre des moyens pour traiter simultanément au moins un service commun à plusieurs modes, notamment le service du répondeur téléphonique.

Ainsi, l'utilisateur peut en consultant le service répondeur unique avoir accès aux différents appels discriminés par catégorie, en même temps, rapidement et commodément.

De préférence également, les moyens de sélection, associés à chaque radiotéléphone mobile, pour sélectionner un mode d'utilisation comprennent une touche, notamment une touche sensible à une action prolongée, ou des moyens pour faire défiler ledit menu sur un écran de visualisation du radiotéléphone mobile.

L'invention concerne également un radiotéléphone mobile, simultanément utilisé selon au moins deux modes d'utilisation correspondants à au moins deux catégories d'appels ayant chacune un numéro de ligne distinct, notamment des appels personnels et des appels professionnels.

Ledit radiotéléphone mobile comprend :
- des moyens pour mettre en oeuvre une gamme de services spécifiques à chaque mode d'utilisation,
- des moyens de communication, notamment un écran de visualisation, pour communiquer à l'utilisateur un menu unique spécifiant les différents modes d'utilisation et les services qui leur sont spécifiques,
- des moyens de sélection pour sélectionner sur ledit menu unique undit mode d'utilisation et lesdits services.

Grâce à cette combinaison de moyens, l'utilisateur peut, sans interrompre le fonctionnement du radiotéléphone mobile, programmer de manière ergonomique, au moyen du menu, les modalités selon lesquelles les appels personnels ou professionnels qu'il émet ou reçoit doivent être traités.
Le radiotéléphone mobile selon l'invention comprend en outre :
- des moyens de discrimination pour discriminer entre chaque catégorie d'appels entrant et/ou sortant, selon le mode sélectionné,
- des moyens de calcul pour calculer des données nécessaires à l'établissement du montant des factures relatives à chaque catégorie d'appels,
- des moyens de transmission et de réception hertziennes, vers un centre de gestion d'appels téléphoniques entrants et/ou sortants,

De préférence, le radiotéléphone mobile est tel qu'il comprend en outre des moyens pour traiter simultanément au moins un service commun à plusieurs modes, notamment le service du répondeur téléphonique.

Ainsi, l'utilisateur peut, en consultant le service répondeur unique, avoir accès aux différents appels discriminés par catégorie, en même temps, rapidement et commodément.

D'autres caractéristiques et avantages de l'invention apparaîtront à la lecture de la description de variantes de réalisation de l'invention, données à titre d'exemple indicatif et non limitatif, et de :
- la figure 1 qui représente une vue en perspective d'une variante de réalisation du système selon l'invention ;
- la figure 2 qui représente une vue en perspective d'une variante de réalisation d'un radiotéléphone mobile selon l'invention ;
- la figure 2a qui représente une vue en perspective d'une variante de réalisation d'un radiotéléphone mobile selon l'invention, la batterie ayant été enlevée.

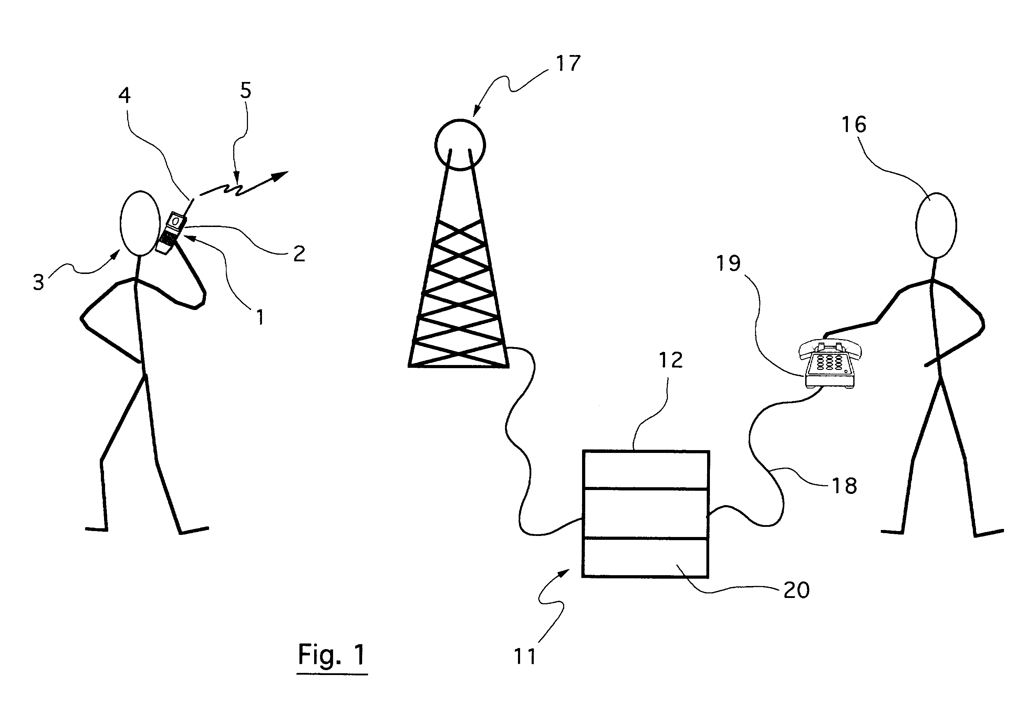

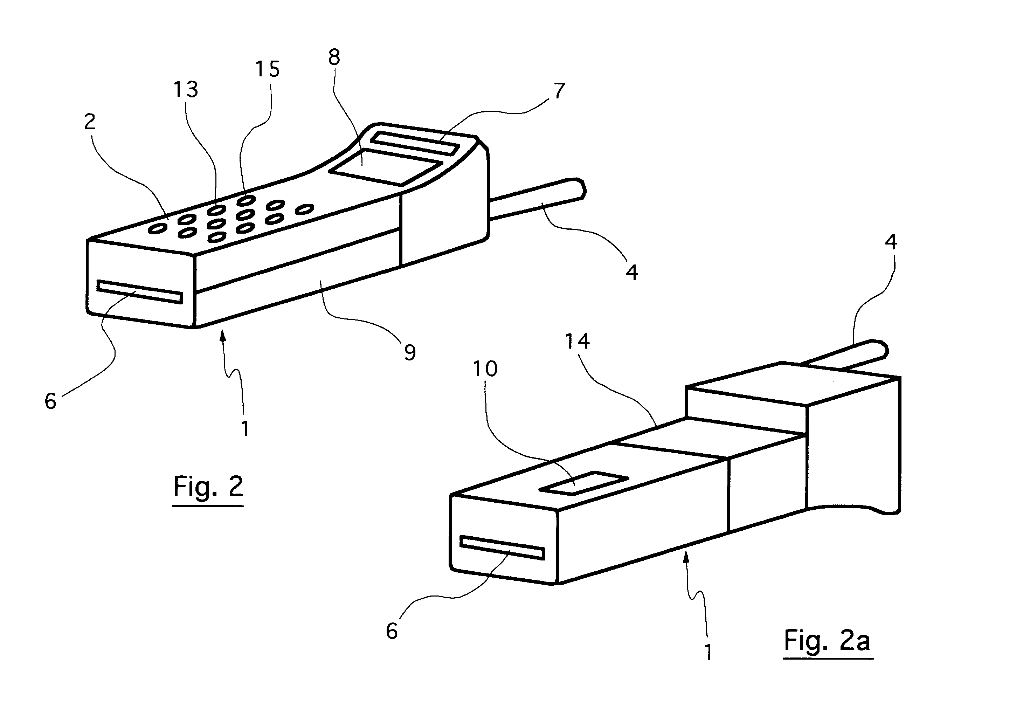

On va maintenant décrire les figures 1, 2 et 2a.
De manière connue en soi, le radiotéléphone mobile 1 comporte un clavier 2 au moyen duquel l'utilisateur 3 peut entrer des données. Une antenne 4 lui permet d'émettre et/ou de recevoir par liaison hertzienne 5 des signaux électromagnétiques porteurs de données et/ou de fréquences vocales numérisées. Il comporte également un microphone 6 et un haut parleur 7 au moyen duquel l'utilisateur transmet et reçoit des messages audio. Un écran de visualisation 8 permet à l'utilisateur 3 de connaître l'état du radiotéléphone mobile 1 et de sélectionner les fonctions dont il a l'usage. Les circuits électroniques du radiotéléphone mobile sont alimentés par une batterie 9.

### Initialisation

A chaque catégorie d'appels est associé un code d'identification spécifique : un code d'identification professionnel et un code d'identification personnel. Ces codes peuvent être identiques ou distincts pour les deux catégories d'appels. Ils sont gardés secrets par l'utilisateur 3. Celui-ci les entre dans le radiotéléphone mobile 1, lors de la phase d'initialisation, au moyen du clavier 2 afin qu'ils puissent être comparés (de manière connue en soi, norme GSM) avec les codes enregistrés dans les zones mémoires affectées à cet effet dans les circuits de sécurité 10 (carte SIM) (voir la vue éclatée de la figure 2a) du radiotéléphone mobile 1. En cas de comparaison positive, l'utilisateur 3 peut utiliser le radiotéléphone mobile 1 dont il dispose selon les modalités financières associées à ces codes. Il a également accès à la gamme des services proposés par le centre de gestion d'appels 11 de l'opérateur de télécommunication. L'utilisation de ces codes d'identification permet d'éviter qu'un utilisateur 3 non autorisé, mal intentionné, ne fasse usage d'un radiotéléphone mobile 1 qui ne lui est pas destiné.

Après initialisation, le radiotéléphone mobile 1 contient les informations nécessaires au bon fonctionnement des deux catégories d'appels. En particulier, il contient:
- les numéros d'appels de chacune des catégories d'appels. Comme ces numéros sont distincts, il est possible de discriminer entre les appels entrants selon qu'ils sont d'ordre professionnel ou personnel ;
- le numéro de renvoi vers le répondeur vocal 12 (de préférence numéro de renvoi vers le répondeur vocal 12 est le même pour chaque catégorie d'appels) ;
- les numéros de consultation nationaux ou internationaux du répondeur vocal 12.

### Sélection du mode d'utilisation

Lorsque l'utilisateur 3 met en marche son radiotéléphone mobile 1, le menu qui apparaît sur l'écran de visualisation 8, lui demande d'entrer son code d'identification. Suite à la saisie du code d'identification, la catégorie d'appels sélectionnée, correspondant au code d'identification, est considérée comme active (première variante). Il peut être également prévu (deuxième variante) que le dernier mode d'utilisation sélectionné, la dernière catégorie d'appels active (celle qui était en service lorsque l'utilisateur 3 a éteint son radiotéléphone mobile 1) est à nouveau sélectionné, lorsque l'utilisateur met en marche son radiotéléphone mobile .

De préférence, le radiotéléphone mobile est programmé de telle sorte que dans le cas où l'utilisateur utilise deux codes d'identification distincts, c'est la première variante qui est appliquée. En revanche, dans le cas où l'utilisateur utilise un seul code d'identification, c'est la deuxième variante qui est appliquée.

La catégorie d'appels active (le mode d'utilisation sélectionné) apparaît sur le menu de référence de l'écran de visualisation 8. En effet, l'utilisateur 3 doit avoir à tout moment, en mode veille, la possibilité de vérifier facilement et immédiatement la catégorie d'appels active (le mode d'utilisation sélectionné), c'est à dire la catégorie du destinataire des appels ( personnels, professionnels) et l'identité du payeur.

### Changement de mode d'utilisation

L'utilisateur peut facilement changer de mode d'utilisation (de catégorie d'appels). Par exemple, s'il souhaite passer de la catégorie professionnelle à la catégorie personnelle, il lui suffit de faire défiler le menu de référence jusqu'au moment où apparaît sur l'écran de visualisation 8 le mode d'utilisation (la catégorie d'appels) qui lui convient, ensuite il sélectionne cette catégorie. Pour faire défiler le menu et sélectionner l'option qui lui convient sur le menu, l'utilisateur procède, de manière en soi connue, en actionnant les touches 13 du clavier 2 prédéterminées à cet effet. Ces touches 13 contrôlent le microcalculateur 14 contenu dans le radiotéléphone mobile de telle sorte que les fonctions disponibles apparaissant sur l'écran de visualisation 8 (catégorie d'appels, gamme de services, identification du payeur, etc.) deviennent opératoires.

De manière ergonomique et rapide, l'utilisateur peut aussi procéder au changement de mode d'utilisation en appuyant, notamment de manière prolongée, sur l'une des touches 15 du clavier 2. Cette action prolongée a pour effet de provoquer, de manière connue en soi, l'activation du nouvel état. Ainsi, si le radiotéléphone mobile est dans l'état catégorie d'appels personnels, une action sur une touche 15 le fait basculer dans l'état catégorie d'appels professionnels et réciproquement.

Au cours de la procédure de changement de catégorie d'appels, l'utilisateur peut être conduit à introduire le code d'identification associé à la nouvelle catégorie d'appels. Le menu l'invite à procéder à cette opération lorsqu'il a choisi d'avoir deux codes d'identification distincts : un pour la catégorie d'appels professionnels, un pour la catégorie d'appels personnels.

### Gamme de services, changement de la gamme de services

En changeant de catégorie d'appels (de mode d'utilisation), l'utilisateur bascule également de la gamme des services associée au précédent mode à celle associée au nouveau mode. De manière connue en soi, le microcalculateur 14 du radiotéléphone mobile procède à ce changement de gamme de services.
Chaque mode d'utilisation bénéficie d'une gamme de services spécifiques et distincts (secours, service client, annuaire, kiosque, compte d'abonné). Ces services sont mis en oeuvre par les moyens de calcul 20 du centre de gestion d'appels 11. Le répondeur vocal 12 constitue une exception. Il est commun et intègre les deux modes d'utilisation. Toutefois, le message d'accueil et la procédure de rappel automatique de l'utilisateur par le répondeur vocal 12 sont personnalisés selon le mode d'utilisation personnel ou professionnel. Le répondeur vocal 12 commun permet à l'utilisateur 3 de gérer directement l'ensemble des communications dirigées vers l'utilisateur indépendamment du mode d'utilisation (de la catégorie d'appels) sélectionné.

L'employeur peut définir des règles de gestion applicables au mode d'utilisation professionnel des utilisateurs (seuil de dépenses, tranches horaires d'utilisation, numéros autorisés ou interdits à terme, etc.).
Le menu apparaissant sur l'écran de visualisation 8 propose d'autres options à l'utilisateur. En particulier, il peut lui proposer de choisir le traitement que subiront les appels entrants appartenant à la catégorie d'appels correspondant au mode d'utilisation qu'il n'a pas sélectionné. Par exemple dans la variante de réalisation du menu ci-après décrit, l'utilisateur peut décider :
- de continuer à recevoir les appels dans le nouveau mode d'utilisation sélectionné ;
- de renvoyer les appels vers le répondeur vocal 12 ;
- de renvoyer les appels vers une autre destination (auquel cas il doit entrer le numéro du destinataire vers lequel l'appel est renvoyé).

L'écran de visualisation 8 permet :
- la transmission et/ou réception de messages écrits ou de messages de service (téléchargement de données) ;
- la gestion des doubles appels ;
- la visualisation de l'identité des correspondants 16 ;
- la gestion d'un carnet de numéros de téléphone unique dont l'ordre de présentation des numéros dépend du mode d'utilisation sélectionné ( du mode activé). Les numéros de téléphone associés au mode d'utilisation sélectionné, sont présentés en premier et sont suivis de ceux associés au mode d'utilisation non sélectionné.

### Discrimination des appels entrants

Le microcalculateur 14 du radiotéléphone mobile 1 permet d'identifier et de discriminer, grâce au numéro d'appel composé par le correspondant 16 avec son téléphone 19, la catégorie d'appels dirigé vers l'utilisateur et par conséquent le mode d'utilisation concerné. Si le mode d'utilisation correspondant est sélectionné (est actif) alors, sauf autre paramétrage du menu, l'appel entrant est proposé à l'utilisateur. Si le mode d'utilisation correspondant n'est pas sélectionné (n'est pas actif) alors, selon le paramétrage du menu comme il vient d'être décrit ci-dessus, l'appel entrant peut être renvoyé vers le mode d'utilisation sélectionné (vers le mode actif) ou vers un répondeur vocal 12, ou vers une autre destination. Il est possible de distinguer les appels entrants selon leur catégorie, notamment par une sonnerie spécifique émise par le haut parleur 7 du radiotéléphone mobile, ou un signe sur l'écran de visualisation 8.

L'utilisateur 3 compose normalement le numéro de son correspondant 16. La demande d'appel sortant est analysée en fonction du mode d'utilisation sélectionné (du mode actif) : elle est acceptée ou rejetée. Si la demande d'appel sortant est acceptée et si la communication est établie, via la liaison hertzienne 5, le ou les relais 17, le centre de gestion d'appels 11 de l'opérateur de télécommunication, le réseau téléphonique 18, le combiné téléphonique 19 du correspondant 16, le coût de la communication sera imputé au payeur associé au mode d'utilisation sélectionné (au mode activé).

### Discrimination entre les appels sortants

La distinction entre les types d'appels sortants (appels personnels, appels professionnels) est faite par l'utilisateur 3. Lorsque l'utilisateur sélectionne le mode d'utilisation professionnel, les appels sortants sont payés par l'employeur. En revanche lorsque l'utilisateur sélectionne le mode d'utilisation personnel, les appels sont payés par lui-même. Les appels entrants sont facturés sur la base du numéro composé par l'appelant. A cet effet, le centre de gestion d'appels 11 dispose de moyens de calcul 20.

## Revendications

1. Procédé pour utiliser simultanément un radiotéléphone mobile (1) selon au moins deux modes d'utilisation correspondants à au moins deux catégories d'appels ayant chacune un numéro de ligne distinct, notamment des appels personnels et des appels professionnels ;
ledit procédé comprenant les étapes :
- d'associer à chaque mode d'utilisation une gamme de services (11 20) ;
- de communiquer les différents modes d'utilisation et les services qui leur sont associés au moyen d'un menu unique délivré à l'utilisateur (3), notamment sous forme visuelle sur un écran de visualisation (8) associé au radiotéléphone mobile (1) ;
- de sélectionner (15) undit mode d'utilisation et lesdits services ;
*(de sorte que l'utilisateur peut, sans interrompre le fonctionnement du radiotéléphone mobile, programmer de manière ergonomique, au moyen du menu, les modalités selon lesquelles les appels personnels ou professionnels qu'il émet ou reçoit doivent être traités)*
- de discriminer (14) entre les catégories d'appels, entrants et/ou sortants, selon le mode sélectionné ;
- d'établir (20) une facturation indépendante pour chaque catégorie d'appels.

2. Procédé selon la revendication 1 tel qu'il comprend en outre l'étape :
- d'associer au moins un même service à plusieurs modes, notamment le service répondeur (12),
*(de sorte que l'utilisateur peut, en consultant le service répondeur unique, avoir accès en même temps, rapidement et commodément aux différents messages discriminés par catégories).*

3. Procédé selon l'une quelconque des revendications 1 ou 2 tel que l'étape de sélection du mode d'utilisation comprend l'étape d'un appui sur une touche (15) du radiotéléphone mobile (1).

4. Procédé selon l'une quelconque des revendications 1 ou 2 tel que l'étape de sélection du mode d'utilisation comprend l'étape de faire défiler ledit menu sur un écran de visualisation (8) du radiotéléphone mobile (1).

5. Procédé selon l'une quelconque des revendications 1 à 4 tel qu'il comprend en outre l'étape de distinguer les appels entrants selon leur catégorie notamment par une sonnerie spécifique (7) ou un signe sur l'écran de visualisation (8).

6. Système pour utiliser simultanément au moins un radiotéléphone mobile selon au moins deux modes d'utilisation correspondants à au moins deux catégories d'appels ayant chacune un numéro de ligne distinct, notamment des appels personnels et des appels professionnels ;
ledit système comprenant :
- des moyens (11, 14, 20) pour mettre en oeuvre une gamme de services spécifiques à chaque mode d'utilisation ;
- des moyens de communication, notamment un écran de visualisation (8), associés à chaque radiotéléphone mobile (1) pour communiquer à l'utilisateur (3) un menu unique spécifiant les différents modes d'utilisation et les services qui leur sont spécifiques ;
- des moyens de sélection (15), associés à chaque radiotéléphone mobile, pour sélectionner sur ledit menu unique undit mode d'utilisation et lesdits services ;
*(de sorte que l'utilisateur peut, sans interrompre le fonctionnement du radiotéléphone mobile, programmer de manière ergonomique, au moyen du menu, les modalités selon* lesquelles *les appels personnels ou professionnels qu'il émet ou reçoit doivent être traités)*
- au moins un centre de gestion (11) des appels entrants et/ou sortants, interconnecté par des liaisons hertziennes (5, 17) avec chaque radiotéléphone mobile (1) ;
chaque radiotéléphone mobile (1) et/ou le centre de gestion d'appels (11) comprenant :
- des moyens de discrimination (14) pour discriminer entre chaque catégorie d'appels entrants et/ou sortants, selon le mode sélectionné ;
- des moyens de calcul (20) pour établir le montant des factures respectivement relatives à chaque catégorie d'appels.

7. Système selon la revendication 6 tel qu'il comprend en outre :
- des moyens pour traiter simultanément au moins un service commun à plusieurs modes, notamment le service du répondeur téléphonique (12),
(de *sorte que l'utilisateur peut en consultant le service répondeur unique avoir accès aux différents appels discriminés par catégories, en même temps, rapidement et commodément).*

8. Système selon l'une quelconque des revendications 6 ou 7 tel que les moyens de sélection associés à chaque radiotéléphone mobile (1) pour sélectionner un mode d'utilisation comprennent une touche (15).

9. Système selon l'une quelconque des revendications 6 ou 7 tel que les moyens de sélection associés à chaque radiotéléphone mobile pour sélectionner undit mode d'utilisation comprennent des moyens pour faire défiler ledit menu sur un écran de visualisation (8) du radiotéléphone mobile (1).

10. Système selon l'une quelconque des revendications 6 à 9 tel que le radiotéléphone mobile comprend en outre des moyens pour distinguer les appels entrants selon leur catégorie notamment une sonnerie spécifique (7) ou un signe sur l'écran de visualisation (8).

11. Radiotéléphone mobile (1) simultanément utilisé selon au moins deux modes d'utilisation correspondants à au moins deux catégories d'appels ayant chacune un numéro de ligne distinct, notamment des appels personnels et des appels professionnels ; ledit radiotéléphone mobile comprenant :
- des moyens (14) pour mettre en oeuvre une gamme de services spécifiques à chaque mode d'utilisation ;
- des moyens de communication, notamment un écran de visualisation (8), pour communiquer à l'utilisateur (3) un menu unique contenant les différents modes d'utilisation et les services qui leur sont spécifiques ;
- des moyens de sélection (15) pour sélectionner sur ledit menu unique undit mode d'utilisation et lesdits services,
*(de sorte que l'utilisateur peut, sans interrompre le fonctionnement du radiotéléphone mobile, programmer de manière ergonotnique, au moyen du menu, les modalités selon lesquelles les appels personnels ou professionnels qu'il émet ou* *reçoit doivent être traités)*
- des moyens de discrimination (14) pour discriminer entre chaque catégorie d'appels entrants et/ou sortants, selon le mode sélectionné ;
- des moyens de calcul (14) pour calculer des données nécessaires à l'établissement du montant des factures relatives à chaque catégorie d'appels ;
- des moyens de transmission et de réception hertziennes (4), vers un centre de gestion (11) des appels téléphoniques entrants et/ou sortants.

12. Radiotéléphone mobile selon la revendication 11 tel qu'il comprend en outre :
- des moyens pour traiter simultanément au moins un service commun à plusieurs modes, notamment le service du répondeur téléphonique 12,
*(de sorte que l'utilisateur peut, en consultant le service répondeur unique, avoir accès aux différents appels discriminés par catégories, en même temps, rapidement et commodément).*

13. Radiotéléphone mobile selon l'une quelconque des revendications 11 ou 12 tel que les moyens de sélection associés à chaque radiotéléphone mobile pour sélectionner un mode d'utilisation comprennent une touche (15).

14. Radiotéléphone selon l'une quelconque des revendications 11 ou 12 tel que les moyens de sélection associés à chaque radiotéléphone mobile pour sélectionner undit mode d'utilisation comprennent des moyens pour faire défiler ledit menu sur un écran de visualisation (8) du radiotéléphone mobile.

15. Radiotéléphone selon l'une quelconque des revendications 11 à 14 tel qu'il comprend en outre des moyens pour distinguer les appels entrants selon leur catégorie notamment une sonnerie spécifique (7) ou un signe sur l'écran de visualisation (8).
